# EUROPEAN PATENT SPECIFICATION

(11) **EP 3 125 332 B1**
(45) Date of publication and mention of the grant of the patent: **12.09.2018**
(21) Application number: 16178955.7
(22) Date of filing: 12.07.2016
(51) Int. Cl.: H01M 2/10, H01M 10/04, H01M 10/052

(54) **BATTERY MODULE, BATTERY PACK COMPRISING THE BATTERY MODULE AND VEHICLE COMPRISING THE BATTERY PACK**
BATTERIEMODUL, BATTERIEPACK MIT DEM BATTERIEMODUL UND FAHRZEUG MIT DEM BATTERIEPACK
MODULE DE BATTERIE, BLOC-BATTERIE COMPRENANT LE MODULE DE BATTERIE ET VÉHICULE ÉQUIPÉ DUDIT BLOC-BATTERIE

(30) Priority: 27.07.2015 KR 20150105795
(43) Date of publication of application: 01.02.2017
(73) Proprietor: LG Chem, Ltd., Yeongdeungpo-gu Seoul 07336 (KR)
(72) Inventor: CHOI, Jong-Woon, 34122 DAEJEON (KR); CHOI, Hang-June, 34122 DAEJEON (KR); MUN, Jeong-O, 34122 DAEJEON (KR)
(74) Representative: Cabinet Plasseraud

(56) References cited:
- EP-A1- 1 117 138
- WO-A1-2007/102669
- US-A1- 2004 142 238

## Description

### TECHNICAL FIELD

The present disclosure relates to a battery module, a battery pack comprising the battery module and a vehicle comprising the battery pack.

### BACKGROUND ART

A secondary battery having good application to various product groups and good electric characteristics such as high energy density is widely applied to not only portable devices but also to electric vehicles (EV) or hybrid electric vehicles (HEV) or the like driven by an electric driving source. Such a secondary battery has a primary advantage of dramatically reducing the use of fossil fuels and a secondary advantage of generating no byproduct in use of energy, and thus attracts attention as a new energy source for enhancing environment-friendly and energy-efficient properties.

Lithium ion batteries, lithium polymer batteries, nickel cadmium batteries, nickel hydrogen batteries, nickel zinc batteries or the like are widely used as secondary batteries at the present. Such a unit secondary battery cell, that is, a unit battery cell has an operating voltage of about 2.5V to 4.2V. Therefore, if a higher output voltage than this is demanded, a plurality of battery cells may be connected in series to configure a battery pack. In addition, depending on a charge/discharge capacity demanded in a battery pack, the plurality of battery cells may be connected in parallel as well to configure the battery pack. Therefore, the number of battery cells to be included in the battery pack may be set variously depending on the demanded output voltage or charge/discharge capacity.

Meanwhile, in the case of connecting a plurality of battery cells in series/parallel to configure a battery pack, a general method is to configure a battery module that includes a battery cell assembly consisting of two or more battery cells first, and then add other configurative elements using these plurality of battery modules to configure the battery pack.

Meanwhile, in a battery module, in the case of a battery cell assembly consisting of a plurality of battery cells, the battery cell may be a lithium polymer pouch-shaped secondary battery cell. In the case of the lithium polymer pouch-shaped secondary battery, as a side reaction of repeated charging and discharging, electrolyte inside the battery may be decomposed and generate gas. Here, the phenomenon in which an exterior shape of the secondary battery cell is deformed by the generated gas is called the swelling phenomenon.

In order to prevent the swelling phenomenon, a conventional battery module controls the swelling phenomenon of a battery cell using the rigidity of an end plate mounted on both ends of a battery cell assembly or applies a separate member of a soft elastic material such as ethylene propylene diene monomer (EPDM) rubber or polyurethane foam or the like between the battery cell and another battery cell to control the swelling phenomenon of the battery cell.

However, in the conventional battery module, first of all, in the case of controlling a cell swelling pressure with the aforementioned rigidity of an end plate only, since there is no structure between a battery cell and another battery cell to absorb the swelling, the swelling pressure has to be tolerated by the end plate only, and thus the end plate has to be made of a thick metal material or a steel plate having a high tensile force has to be used. This hinders fabricating a more compact battery module or leads to a problem of increased fabricating cost for the battery module. In addition, in the case of fixating a battery cell assembly with an end plate only, when configuring a battery cell assembly consisting of a plurality of battery cells, it is difficult to control a thickness tolerance of a unit battery cell, thus making it difficult to assemble the battery cell assembly.

In addition, in the conventional battery module, if a member made of a soft material is applied between a battery cell and another battery cell to control the swelling, it is difficult to apply an initial surface pressure to the battery cell since a soft member is applied, and deformation or the like may easily occur due to wear-out or the like of the member which may occur over time due to the properties of the soft material, thereby causing problems in controlling the swelling later on and leading to deterioration of product reliability.

### DISCLOSURE

### Technical Problem

Therefore, the present disclosure is designed to solve the problems of the related art, and therefore the present disclosure is directed to providing a battery module capable of improving the fabricating efficiency, securing product reliability and controlling the swelling phenomenon, a battery pack including the battery module, and a vehicle including the battery pack.

### Technical Solution

In order to solve the aforementioned purposes, the present disclosure provides a battery module including a battery cell assembly consisting of a plurality of battery cells electrically connected to each other; and an elastic member of a metal material provided between at least two battery cells of the plurality of battery cells of the battery cell assembly, and configured to control cell swelling of the plurality of battery cells.

The elastic member includes a pair of contact plates surface-contacting the battery cell; and an elastic plate provided between the one pair of contact plates, and configured to provide an elastic force to the one pair of contact plates.

The one pair of contact plates may correspond to a surface area of a facing battery cell.

The elastic plate may be formed in a structure where a convex part and a concave part are repeated alternately.

The convex part and the concave part have at least one shape of a half-circular shape, a triangular shape and a trapezoidal shape.

The battery module may include a pair of end plates each provided at either side of the battery cell assembly, and supporting the battery cell assembly, and the elastic member may be further provided between each end plate and the battery cell assembly.

The one pair of contact plate and the elastic plate are integrally coupled.

The elastic member may be provided between every facing battery cells.

The battery cell assembly includes a plurality of cell cartridges where at least one battery cell is seated, and the elastic member is mounted on any one cell cartridge between at least two cell cartridges of the plurality of cell cartridges.

On the cell cartridge where the elastic member is mounted, a mount guide groove for guiding the mounting of the elastic member may be formed.

Furthermore, the present disclosure provides a battery pack including a battery module according to the aforementioned embodiments; and a pack case for packaging the battery module.

Furthermore, the present disclosure provides a vehicle including a battery pack according to the aforementioned embodiment.

### Advantageous Effects

The present disclosure gives the following effects. According to one aspect of the present disclosure, it is possible to provide a battery module capable of improving fabricating efficiency, securing product reliability and controlling the cell swelling phenomenon, and a battery pack comprising the battery module and a vehicle comprising the battery pack.

### DESCRIPTION OF DRAWINGS

Other objects and aspects of the present disclosure will become apparent from the following descriptions of the embodiments with reference to the accompanying drawings.
Fig. 1 is a perspective view of a battery module according to an embodiment of the present disclosure.
Fig. 2 is an exploded perspective view of the battery module of Fig. 1.
Fig. 3 is an exploded perspective view of a battery cell assembly of the battery module of Fig. 2.
Fig. 4 is a perspective view of an elastic member of the battery module of Fig. 2.
Fig. 5 is an exploded perspective view of the elastic member of Fig. 4.
Fig. 6 is a cross-sectional view of the elastic member of Fig. 4.
Figs. 7 and 8 are views provided to explain various embodiments of an elastic plate of the elastic member of Fig. 4.
Fig. 9 is a view provided to explain a battery module according to another embodiment of the present disclosure.
Fig. 10 is a view provided to explain a battery pack according to an embodiment of the present disclosure.

### BEST MODE

Hereinafter, preferred embodiments of the present disclosure will be described in detail with reference to the accompanying drawings, thereby further clarifying the present disclosure. Further, for a better understanding of the present disclosure, the accompanying drawings may include exaggerated measurements of some configurative elements instead of actual scales thereof.

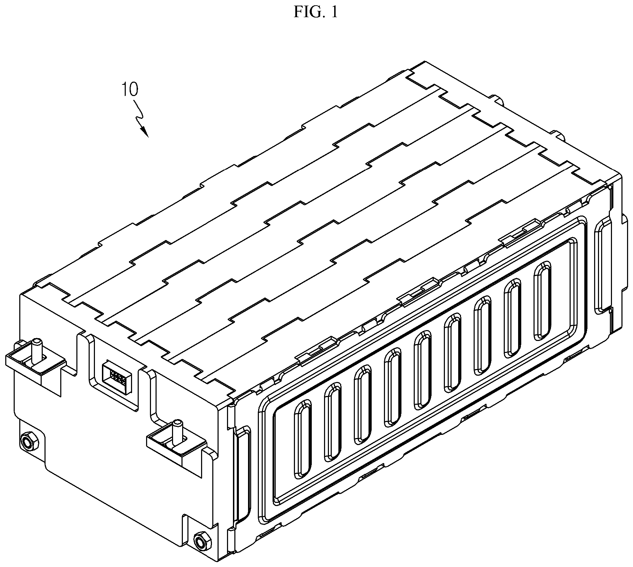

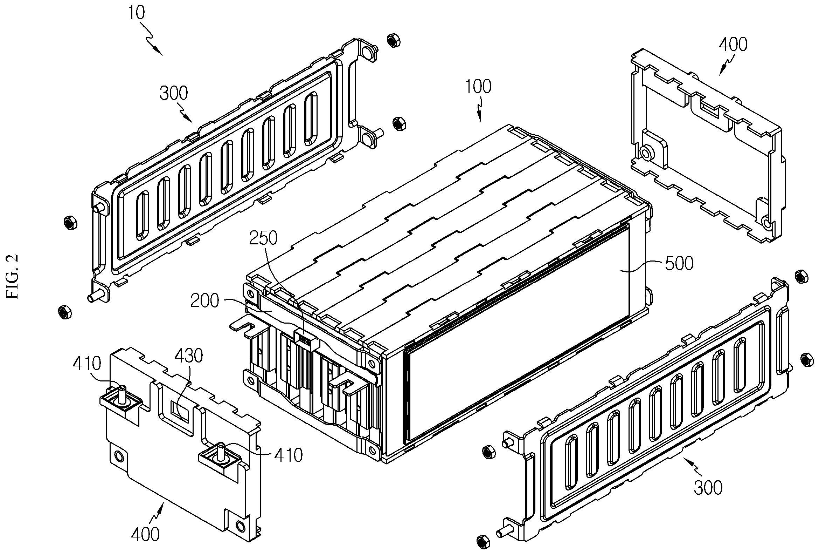

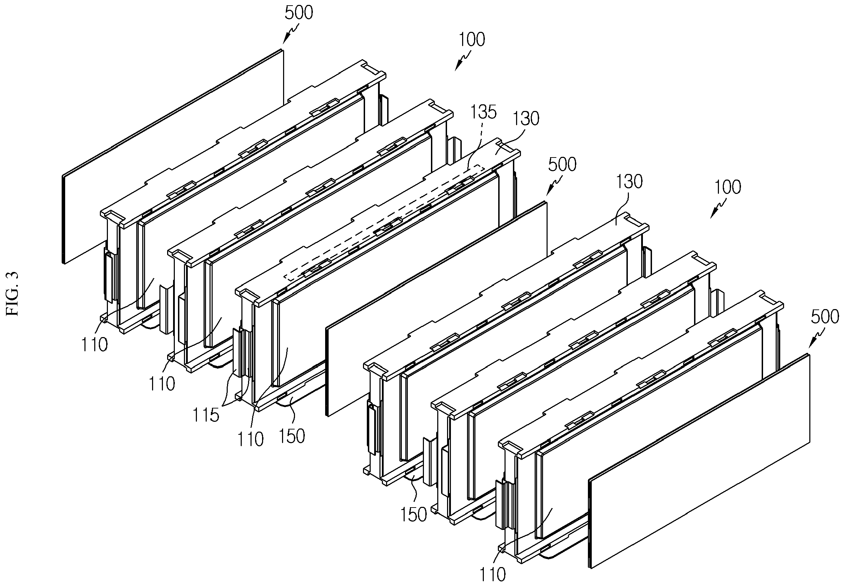

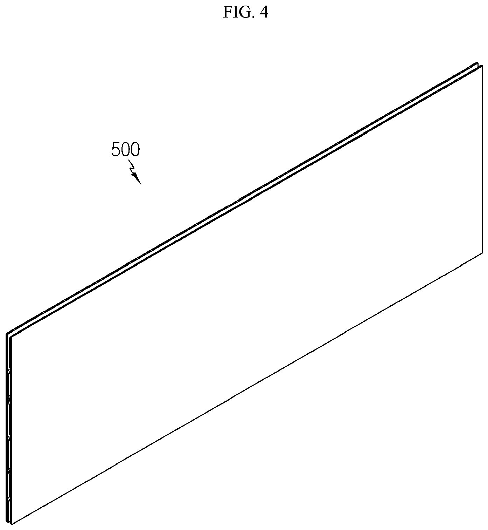

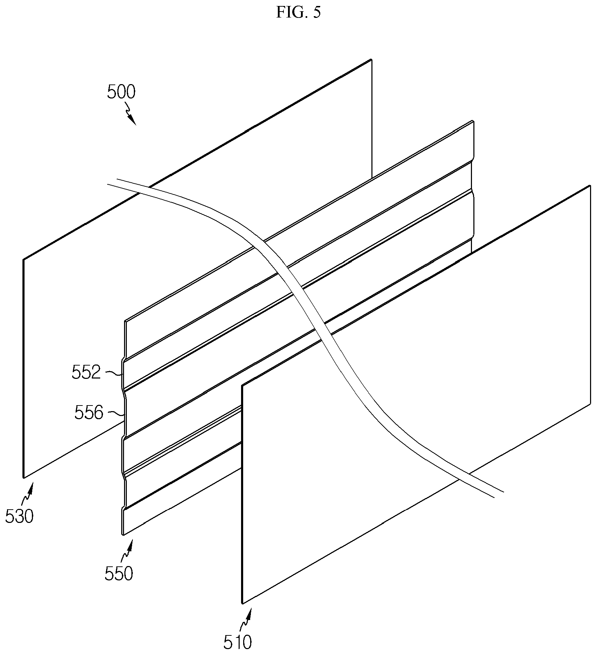

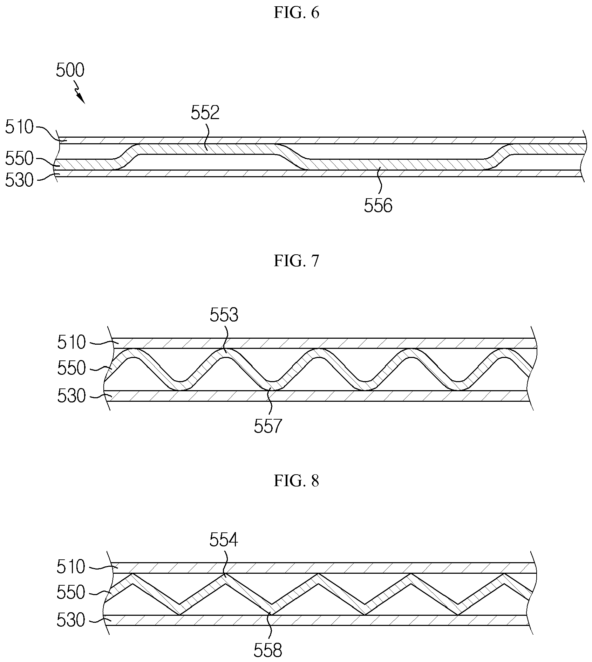

Fig. 1 is a perspective view of a battery module according to an embodiment of the present disclosure, Fig. 2 is an exploded perspective view of the battery module of Fig. 1, Fig. 3 is an exploded perspective view of a battery cell assembly of the battery module of Fig. 2, Fig. 4 is a perspective view of an elastic member of the battery module of Fig. 2, Fig. 5 is an exploded perspective view of the elastic member of Fig. 4, Fig. 6 is a cross-sectional view of the elastic member of Fig. 4, and Fig. 7 and Fig. 8 are views provided to explain various embodiments of an elastic plate of the elastic member of Fig. 4.

Referring to Figs. 1 to 8, a battery module 10 may include a battery cell assembly 100, a terminal frame 200, an end plate 300, a cover frame 400 and an elastic member 500.

The battery cell assembly 100 may include a battery cell 110, a cell cartridge 130 and a cooling fin 150.

The battery cell 110 may be provided in the plurality, and may be electrically connected with each other. Each battery cell 110 may include an electrode assembly, a battery case for accommodating the electrode assembly and an electrode lead 115. Here, the electrode lead 115 may include a positive electrode lead and a negative electrode lead, and the positive electrode lead may be connected to a positive electrode plate of the electrode assembly, and the negative electrode lead may be connected to a negative electrode plate of the electrode assembly.

The battery cell 110 may be a pouch-shaped secondary battery. In the case of the pouch-shaped secondary battery, it may further facilitate realizing an electrically-connected configuration of the plurality of battery cells 110.

The cell cartridge 130 is for facilitating stacking of the plurality of battery cells 110, and the cell cartridge 130 may seat at least one of the plurality of battery cells 110. Such a cell cartridge 130 may be provided in the plurality, and in the present embodiment, each cell cartridge 130 may seat two battery cells 110. The cell cartridge 130 may be limited to a structure where each cell cartridge seats one battery cell, or to a structure where each cell cartridge seats three or more battery cells.

These plurality of cell cartridges 130 may be configured to hold the plurality of battery cells 110 to prevent them from moving and to enable mutual stacking thereof, thereby guiding assembling of the battery cell 110.

The cell cartridge 130 may include a mount guide groove 135.

The mount guide groove 135 is a configurative element for guiding mounting of the elastic member 500 that will be explained hereinafter, and the mount guide groove 135 may be formed on one side surface of the cell cartridge 130. Such a mount guide groove 135 may be formed in a shape corresponding to one side surface of the elastic member 500 so that the one side surface of the elastic member 500 can be fitted into the mount guide groove 135.

The cooling fin 150 may be made of a thermally conductive material such as aluminum, and may be provided in each of the cell cartridges 130 to enable a heat exchange with the battery cell 110. The cooling fin 150 to be provided in each of the cell cartridges 130 may be provided in a form of being inserted into the cell cartridge 130, or being insert-molded therein.

The terminal frame 200 may be provided at one side of the battery cell assembly 100, and may be electrically connected with the electrode leads 115 of the plurality of battery cells 110 of the battery cell assembly 100.

Such a terminal frame 200 may further include a connector 250.

The connector 250 may function as a terminal for being electrically connected with the control device such as the battery management system (BMS) or the like included in a battery pack on an exterior of the battery module 10.

The end plate 300 is for supporting the battery module assembly 100, and may be provided in a pair each of which covers the battery module assembly 100, respectively, from either side of the battery module assembly 100, in directions facing the battery cell 110 arranged on the outermost portion of the battery module assembly 100.

The cover frame 400 is for supporting the battery module assembly 100 along with the one pair of end plates 300, and may be provided in a pair each of which covers the battery module assembly 100, respectively, from either side having the electrode leads 115 of the plurality of battery cells 110 of the battery module assembly 100.

At least one of the one pair of cover frames 400 may include a terminal 410 and a connector through part 430.

The terminal 410 may be electrically connected with the terminal frame 200 so as to be electrically connected with the electrode leads 115 of the plurality of battery cells 110. Such a terminal 410 may be provided in a pair, and may be electrically connected with an external power source or the like.

The connector through part 430 may be formed in the cover frame 400, and may allow the connector 430 to penetrate therethrough to an outside of the cover frame 400. Accordingly, the connector 430 may be electrically connected with the control device such as the BMS or the like included in the battery pack.

The elastic member 500 is for controlling the cell swelling of the plurality of battery cells 110, and may be formed as an assembly made of a metal material. Such an elastic member 500 may be provided in the plurality, and may be provided between at least two battery cells 110 of the plurality of battery cells 110 of the battery cell assembly 100. Here, the elastic member 500 to be provided between the battery cells 110 may be arranged between two battery cells 110 arranged in an exact center of the battery cell assembly 100. Further, the plurality of elastic members 500 may be further provided between each end plate 300 and the battery cell 110 arranged on the outermost portion of the battery cell assembly 100.

In short, in the present embodiment, the plurality of elastic members 500 may be arranged between the end plate 300 and the battery cell 110 arranged on the outermost portion of the battery cell assembly 100 and between the two battery cells 110 arranged in the exact center of the battery cell assembly 100. That is, the total number of the plurality of elastic members 500 provided in the present embodiment may be three(3).

Each elastic member 500 includes a contact plate 510, 530 and an elastic plate 550.

The contact plate 510, 530 may have a flat plate shape made of a metal material, and may be arranged to face the battery cell 110 or the end plate 300, and may surface-contact the battery cell 110 or the end plate 300. Here, the contact plate 510, 530 applies a surface pressure to the battery cell 110 during the surface-contacting.

The contact plate 510, 530 is provided in a pair, and the one pair of contact plates 510, 530 may have a surface area corresponding to a surface area of the facing battery cell 110 to be able to effectively apply the surface pressure to the battery cell 110. Here, it may be preferable that the surface area of the one pair of contact plates 510, 530 is not greater than a surface area of the facing battery cell 110 considering ease of assembling. Meanwhile, for reference, in the present embodiment, the one pair of contact plates 510, 530 may each be called a first contact plate 510 and a second contact plate 530.

The elastic plate 550 may be provided between the one pair of contact plates 510, 530, that is, between the first contact plate 510 and the second contact plate 530, and may provide an elastic force to the one pair of contact plates 510, 530. Here, the elastic plate 550 is integrally coupled with the one pair of contact plates 510, 530, and mounted. The elastic member 500 of the present embodiment may function as an elastic body such as a plate spring by means of elastic coupling with the one pair of contact plates 510, 530.

To be more specific about the elastic plate 500, the elastic plate 550 includes an elastically transformable convex part 552 and concave part 556.

Here, the elastic plate 550 may be formed in a structure where the convex part 552 and the concave part 556 are alternately repeated. The structure in which the convex part 552 and the concave part 556 are alternately repeated may mean repetition of a structure where one concave part 556 is arranged between two convex parts 552, and one convex part 552 is arranged between two concave parts 556.

Such a convex part 552 and a concave part 556 has a trapezoidal shape to be elastically transformable easily. But there is no limitation thereto, and thus the convex part 553 and the concave part 557 has a half-circular shape as illustrated in FIG. 7, or the convex part 554 and the concave part 558 has a triangular shape as illustrated in Fig. 8. The convex part 552 and the concave part 556 are not limited to the aforementioned shape, and may of course also have other different shapes as long as elastically transformable.

Such a convex part 552 and concave part 556 may elastically contact the one pair of contact plates 510, 530, respectively. Specifically, the convex part 552 may elastically contact the first contact plate 510, and the concave part 556 may elastically contact the second contact plate 530.

Since the elastic member 500 according to the present embodiment configured as aforementioned may be formed as an assembly made of a metal material capable of functioning as a plate spring, in addition to controlling the cell swelling, it may apply an initial surface pressure to the battery cell 110 more firmly than when a conventional member made of a soft material or the like controls the cell swelling, thereby effectively absorbing a thickness tolerance when mounting the cell cartridge 130 of the battery cell 110.

Further, the elastic member 500 according to the present embodiment may not cause deformation or the like thereof due to product wear-out over time or the like, which may be a problem in the conventional member made of a soft material or the like.

Accordingly, the battery module 10 according to the present embodiment may markedly improve subsequent product reliability.

Further, since the elastic member 500 according to the present embodiment is an assembly made of a metal material, when it is mounted, structural rigidity of the battery module 10 may also be further improved. Therefore, in the present embodiment, the structural rigidity of the battery module 10 can be secured by the elastic member 500, and thus the rigidity of the battery module 10 can be secured even without forming the end plate 300 with a thick metal material or a steel plate having a high tensile force.

Accordingly, the battery module 10 according to the present embodiment can prevent increase of fabricating costs caused by structural changes of the end plate, thereby significantly improving the fabricating efficiency.

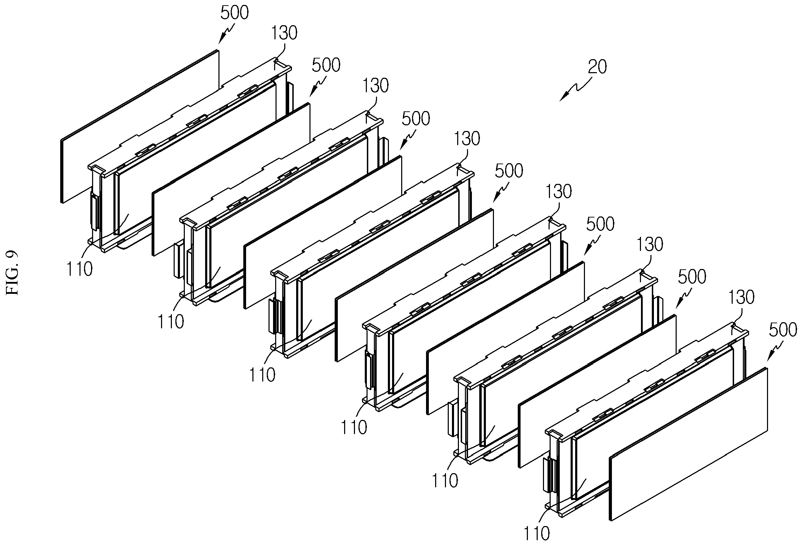

Fig. 9 is a view provided to explain a battery module according to another embodiment of the present disclosure.

The battery module 20 according to the present embodiment is substantially identical or similar to the battery module 10 of the aforementioned embodiment, and thus, hereinafter, explanation will be made focusing on the differences without repeatedly explaining identical or similar configurations.

Referring to Fig. 9, the plurality of elastic members 500 of the battery module 20 may each be provided between every facing battery cells 110. That is, the plurality of elastic members 500 may be arranged between the plurality of cell cartridges 130 and mounted on each of the plurality of cell cartridges 130.

As aforementioned, by the plurality of elastic members 500 provided between the every facing battery cells 110, the battery module 20 according to the present embodiment may control the cell swelling more effectively, further improve the efficiency of absorbing the thickness allowance of the battery cells 110 and also further improve the structural rigidity of the battery module 20.

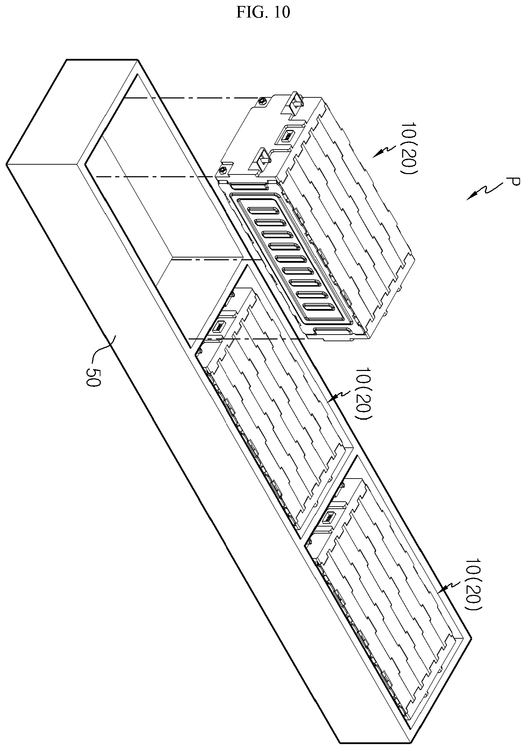

Fig. 10 is a view provided to explain a battery pack according to an embodiment of the present disclosure.

Referring to Fig. 10, the battery pack P may include at least one battery module 10 according to the aforementioned embodiment, and a pack case 50 for packaging the at least one battery module 10, 20.

Such a battery pack P may be a fuel source of a vehicle, and may be provided in the vehicle. By way of example, the battery pack P may be provided in an electric vehicle, in a hybrid vehicle and in a vehicle in other different methods that enable the battery pack P to be used as a fuel source. Further, besides the aforementioned vehicles, the battery pack P may of course be provided in other different devices, equipment and facilities such as an energy storage system or the like which uses secondary batteries.

As aforementioned, since the battery pack P according to the present embodiment and the devices or equipment and facilities provided with the battery pack P such as the aforementioned vehicles include the aforementioned battery module 10, 20, it is possible to realize a battery pack P and a vehicle having all the advantages brought by the aforementioned battery module 10, 20.

**[Description of reference numerals]**

| | |
|---|---|
| 10: battery module | 100: battery cell assembly |
| 110: battery cell | 115: electrode lead |
| 130: cell cartridge | 135: mount guide groove |
| 150: cooling fin | 200: terminal frame |
| 250: connector | 300: end plate |
| 400: cover frame | 410: terminal |
| 430: connector through part | 500: elastic member |
| 510: first contact plate | 530: second contact plate |
| 550: elastic plate | 552: convex part |
| 556: concave part | |

## Claims

1. A battery module (10) comprising:
a battery cell assembly (100) including a plurality of battery cells (110)
electrically connected to each other; and
an elastic member (500) of a metal material provided between at least two battery cells (110) of the plurality of battery cells of the battery cell assembly (100), and configured to control cell swelling of the plurality of battery cells (110),
wherein the battery cell assembly (100) comprises a plurality of cell cartridges (130) where at least one battery cell (110) is seated, and
the elastic member (500) is mounted on any one cell cartridge (130) between at least two cell cartridges (130) of the plurality of cell cartridges (130),
wherein the elastic member (500) comprises:
a pair of contact plates surface-contacting the battery cell; and
an elastic plate (550) provided between the one pair of contact plates (510, 530), and configured to provide an elastic force to the one pair of contact plates (510, 530),
wherein the one pair of contact plate (510, 530) and the elastic plate (550) are integrally coupled and the elastic plate (550) comprises a convex part (552, 553, 554) and a concave part (556, 557, 558) which have a trapezoidal, half-circular or triangular shape.

2. The battery module of claim 1, wherein the one pair of contact plates (510, 530) corresponds to a surface area of a facing battery cell (110).

3. The battery module of claim 1, wherein the elastic plate (550) is formed in a structure where a convex part and a concave part are repeated alternately.

4. The battery module of claim 1, comprising a pair of end plates each provided at either side of the battery cell assembly, and supporting the battery cell assembly,
wherein the elastic member (500) is further provided between each end plate and the battery cell assembly.

5. The battery module of claim 1, wherein the elastic member (500) is provided between every facing battery cells.

6. The battery module of claim 1, wherein on the cell cartridge where the elastic member (500) is mounted, a mount guide groove for guiding the mounting of the elastic member is formed.

7. A battery pack comprising:
a battery module according to claim 1; and
a pack case for packaging the battery module.

8. A vehicle comprising a battery pack according to claim 7.

## Patentansprüche

1. Batteriemodul (10), umfassend:
eine Batteriezellenanordnung (100), umfassend eine Mehrzahl von Batteriezellen (110), welche elektrisch miteinander verbunden sind; und
ein elastisches Element (500) aus einem Metallmaterial, welches zwischen wenigstens zwei Batteriezellen (110) der Mehrzahl von Batteriezellen der Batteriezellenanordnung (100) bereitgestellt ist, und dazu eingerichtet ist, ein Anschwellen von Zellen der Mehrzahl von Batteriezellen (110) zu steuern/regeln,
wobei die Batteriezellenanordnung (100) eine Mehrzahl von Zelleinsätzen (130) umfasst, in welche wenigstens eine Batteriezelle (110) eingesetzt ist, und
das elastische Element (500) an irgendeinem Zelleinsatz (130) zwischen wenigstens zwei Zelleinsätzen (130) der Mehrzahl von Zelleinsätzen (130) montiert ist,
wobei das elastische Element (500) umfasst:
ein Paar von Kontaktplatten, welche eine Oberfläche der Batteriezelle berühren; und
eine elastische Platte (550), welche zwischen dem einen Paar von Kontaktplatten (510, 530) bereitgestellt ist, und dazu eingerichtet ist, eine elastische Kraft auf das eine Paar von Kontaktplatten (510, 530) bereitzustellen,
wobei das eine Paar von Kontaktplatten (510, 530) und die elastische Platte (550) integral gekoppelt sind und die elastische Platte (550) einen konvexen Teil (552, 553, 554) und einen konkaven Teil (556, 557, 558) umfasst, welche eine trapezförmige, eine halbkreisförmige oder eine dreieckige Form aufweisen.

2. Batteriemodul nach Anspruch 1, wobei das eine Paar von Kontaktplatten (510, 530) einem Oberflächenbereich einer zugewandten Batteriezelle (110) entspricht.

3. Batteriemodul nach Anspruch 1, wobei die elastische Platte (550) in einer Struktur ausgebildet ist, in welcher ein konvexer Teil und ein konkaver Teil abwechselnd wiederholt sind.

4. Batteriemodul nach Anspruch 1, umfassend ein Paar von Endplatten, welche jeweils an jeder Seite der Batteriezellenanordnung bereitgestellt sind und welche die Batteriezellenanordnung haltern, wobei das elastische Element (500) ferner zwischen jeder Endplatte und der Batteriezellenanordnung bereitgestellt ist.

5. Batteriemodul nach Anspruch 1, wobei das elastische Element (500) zwischen jeder zugewandten Batteriezelle bereitgestellt ist.

6. Batteriemodul nach Anspruch 1, wobei an dem Zelleinsatz, an welchem das elastische Element (500) montiert ist, eine Montageführungsnut zum Führen des Montierens des elastischen Elements ausgebildet ist.

7. Batteriepack umfassend:
ein Batteriemodul nach Anspruch 1; und
ein Packgehäuse zum Verpacken des Batteriemoduls.

8. Fahrzeug, umfassend einen Batteriepack nach Anspruch 7.

## Revendications

1. Module de batterie (10) comprenant :
un ensemble de cellules de batterie (100) incluant une pluralité de cellules de batterie (110) reliées électriquement les unes aux autres ; et
un élément élastique (500) d'un matériau métallique fourni entre au moins deux cellules de batterie (110) de la pluralité de cellules de batterie de l'ensemble de cellules de batterie (100), et configuré pour commander le gonflement de cellule de la pluralité de cellules de batterie (110),
dans lequel l'ensemble de cellules de batterie (100) comprend une pluralité de cartouches pour cellule (130) où au moins une cellule de batterie (110) est placée, et l'élément élastique (500) est monté sur une quelconque cartouche pour cellule (130) entre au moins deux cartouches pour cellule (130) de la pluralité de cartouches pour cellule (130),
dans lequel l'élément élastique (500) comprend :
une paire de plaques de contact dont la surface est en contact avec la cellule de batterie ; et
une plaque élastique (550) fournie entre la paire de plaques de contact (510, 530), et configurée pour fournir une force élastique à la paire de plaques de contact (510, 530),
dans lequel la paire de plaques de contact (510, 530) et la plaque élastique (550) sont couplées intégralement et la plaque élastique (550) comprend une partie convexe (552, 553, 554) et une partie concave (556, 557, 558) qui ont une forme trapézoïdale, semi-circulaire ou triangulaire.

2. Module de batterie selon la revendication 1, dans lequel la paire de plaques de contact (510, 530) correspond à une surface d'une cellule de batterie en regard (110).

3. Module de batterie selon la revendication 1, dans lequel la plaque élastique (550) est formée dans une structure où une partie convexe et une partie concave sont répétées de manière alternée.

4. Module de batterie selon la revendication 1, comprenant une paire de plaques d'extrémité chacune fournie au niveau de l'un ou l'autre côté de l'ensemble de cellules de batterie, et soutenant l'ensemble de cellules de batterie,
dans lequel l'élément élastique (500) est en outre fourni entre chaque plaque d'extrémité et l'ensemble de cellules de batterie.

5. Module de batterie selon la revendication 1, dans lequel l'élément élastique (500) est fourni entre toutes les cellules de batterie en regard.

6. Module de batterie selon la revendication 1, dans lequel sur la cartouche pour cellule où l'élément élastique (500) est monté, une rainure de guidage de montage pour guider le montage de l'élément élastique est formée.

7. Bloc-batterie comprenant :
un module de batterie selon la revendication 1 ; et
un boîtier pour renfermer le module de batterie.

8. Véhicule comprenant un bloc-batterie selon la revendication 7.
